# FASCICULE DE BREVET EUROPEEN

(11) **EP 2 794 512 B1**
(45) Date de publication et mention de la délivrance du brevet: **14.10.2015**
(21) Numéro de dépôt: 12823015.8
(22) Date de dépôt: 19.12.2012
(51) Int. Cl.: C04B 35/484, C04B 35/657, C03B 5/43

(54) **PRODUIT REFRACTAIRE A FORTE TENEUR EN ZIRCONE**
FEUERFESTES PRODUKT MIT HOHEM ZIRKONOXIDGEHALT
REFRACTORY PRODUCT HAVING A HIGH CONTENT OF ZIRCONIA

(30) Priorité: 21.12.2011 FR 1162149
(43) Date de publication de la demande: 29.10.2014
(73) Titulaire: Saint-Gobain Centre de Recherches et d'Etudes Européen, 92400 Courbevoie (FR)
(72) Inventeur: GAUBIL, Michel, F-30133 Les Angles (FR); MASSARD, Ludovic, F-84170 Monteux (FR)
(74) Mandataire: Nony
(86) Numéro de dépôt international: PCT/IB2012/057485
(87) Numéro de publication internationale: WO 2013/093804

(56) Documents cités:
- WO-A1-03/074445
- FR-A1- 2 913 013
- FR-A1- 2 953 825

## Description

### Domaine technique

L'invention concerne un nouveau produit réfractaire fondu et coulé à forte teneur en zircone.

### Etat de la technique

Parmi les produits réfractaires, on distingue les produits fondus et coulés, bien connus pour la construction des fours de fusion du verre, et les produits frittés.

A la différence des produits frittés, les produits fondus et coulés comportent le plus souvent une phase vitreuse intergranulaire reliant des grains cristallisés. Les problèmes posés par les produits frittés et par les produits fondus et coulés, et les solutions techniques adoptées pour les résoudre, sont donc généralement différents. Une composition mise au point pour fabriquer un produit fritté n'est donc pas *a priori* utilisable telle quelle pour fabriquer un produit fondu et coulé, et réciproquement.

Les produits fondus et coulés, souvent appelés électrofondus, sont obtenus par fusion d'un mélange de matières premières appropriées dans un four à arc électrique ou par toute autre technique adaptée à ces produits. La matière en fusion est ensuite coulée dans un moule puis le produit obtenu subit un cycle de refroidissement contrôlé pour être amené à température ambiante sans fracturation. Cette opération est appelée « recuisson » par l'homme de l'art.

Parmi les produits fondus et coulés, les produits électrofondus à forte teneur en zircone sont réputés pour leur très grande résistance à la corrosion sans coloration du verre produit et sans génération de défauts.

Classiquement, les produits fondus et coulés à forte teneur en zircone comportent également de l'oxyde de sodium (Na₂O) pour éviter la formation de zircon à partir de la zircone et de la silice présentes dans le produit. La formation de zircon est en effet néfaste puisqu'elle s'accompagne d'une diminution de volume de l'ordre de 20%, créant ainsi des contraintes mécaniques à l'origine de fissures.

FR 2 701 022 décrit des produits fondus et coulés à forte teneur en zircone qui contiennent 7,0 à 11,2% en poids de SiO₂, 0,05 à 1,0% en poids de P₂O₅, 0,05 à 1,0% en poids d'oxyde de bore B₂O₃ et 0,01 à 0,12% en poids de Na₂O + K₂O.

FR 2 723 583 décrit des produits fondus et coulés à forte teneur en zircone qui contiennent 3 à 8% en poids de SiO₂, 0,1 à 2,0% en poids d'Al₂O₃, 0,05 à 3,0% en poids d'oxyde de bore B₂O₃, 0,05 à 3% en poids de BaO + SrO + MgO, et 0,05 à 0,6% en poids de Na₂O + K₂O et moins de 0,3% en poids de Fe₂O₃ + TiO₂.

FR 2 836 682 décrit des produits fondus et coulés à forte teneur en zircone qui contiennent 2 à 8% en poids de SiO₂, 0,2 à 2,0% en poids d'Al₂O₃, 0,12 à 1,0% en poids de Na₂O et 0,5 à 2,6% en poids de Y₂O₃ + CaO.

FR 2 953 825 décrit des produits fondus et coulés à forte teneur en zircone qui contiennent 2 à 10 % en poids de SiO₂, 0,3 à 2,0% en poids d'Al₂O₃, moins de 0,5% en poids de Na₂O, 0,01 à 4,5 % en poids de B₂O₃ et 0,8 à 4,0% en poids de Y₂O₃+ CeO₂ +CaO + MgO.

Le produit ER-1195 fabriqué et commercialisé par la Société Européenne des Produits Réfractaires et couvert par le brevet EP-B-403 387 est aujourd'hui largement utilisé dans les fours de fusion du verre. Sa composition chimique comprend environ 94% de zircone, 4 à 5% de silice, environ 1% d'alumine, 0,3% d'oxyde de sodium et moins de 0,05% en poids de P₂O₅. Elle est typique des produits à forte teneur en zircone utilisés pour les fours verriers.

Ces produits sont performants mais il existe un besoin permanent pour un produit fondu à forte teneur en zircone présentant une bonne faisabilité et une longévité élevée, notamment lorsqu'il est utilisé dans une cuve de four de verrerie.

La présente invention vise à satisfaire ce besoin.

### Résumé de l'invention

L'invention propose un produit réfractaire fondu et coulé comportant, en pourcentages massiques sur la base des oxydes et pour un total de 100% :
- ZrO₂ : complément à 100%
- Hf₂O : < 5%
- SiO₂ : 2% à 10%
- Y₂O₃ : 0,4% à 2,0%
- CaO : 4,0% à 8,0%
- B₂O₃ + Na₂O + K₂O : 0,4% à 3,0%, voire 0,5% à 3,0%,
- Al₂O₃ : 0,3% à 2,0%
- P₂O₅ : < 0,05%
- Fe₂O₃ + TiO₂ : < 0,55%
- autres espèces : < 1,5%.

La zircone existe sous trois formes cristallographiques. En l'absence de dopant, la zircone est sous la forme monoclinique jusqu'à 1150 °C, sous la forme tétragonale stable entre 1150°C et 2370°C, et sous la forme cubique à partir de 2370°C.

Lors de l'attrempage d'un four dont les parois comportent des blocs de produit réfractaire à forte teneur en zircone, la transformation de la phase monoclinique vers la phase tétragonale s'accompagne d'une diminution de volume des joints par dilatation thermique d'environ 4,5%, réversible. Si l'augmentation de volume à la température de fonctionnement du four n'est pas aussi importante que la diminution due au changement de phase alors les joints entre deux blocs consécutifs, en l'absence de pression mécanique, resteront ouverts.

Par ailleurs, un bloc d'une cuve d'un four de verrerie est soumis en service à une température qui diminue depuis sa face au contact du verre en fusion (« face chaude ») jusqu'à sa face exposée à l'extérieur de la cuve (« face froide »). Or un produit à forte teneur en zircone présente classiquement une température de dilatation maximale comprise entre les températures de ces deux faces. Deux blocs adjacents sont donc assemblés de manière à toujours rester en contact au moins au niveau de la région où ils sont soumis à cette température de dilatation maximale. On s'assure ainsi qu'au moins au niveau de cette région critique ils pourront assurer une étanchéité de la cuve. Il est important de limiter la corrosion dans cette région critique.

Or la corrosion par le verre en fusion augmente généralement avec sa température. Les inventeurs ont donc imaginé qu'il pouvait être avantageux de chercher à réduire la température de dilatation maximale du matériau des blocs afin de déplacer ladite région critique vers la face froide des blocs. Ainsi cette région critique peut-elle être en contact avec du verre en fusion plus visqueux et moins corrosif que suivant l'état de la technique antérieur.

Comme on le verra plus en détail dans la suite de la description, grâce à leurs recherches, les inventeurs ont découvert qu'un produit de la présente invention présente un comportement dilatométrique remarquable, et en particulier une température de dilatation maximale réduite, et assure ainsi une fermeture totale des joints. En outre, ce produit conserve une faisabilité industrielle élevée.

Un produit selon l'invention peut encore comporter une ou plusieurs des caractéristiques optionnelles suivantes, y compris lorsqu'il est conforme aux modes de réalisation particuliers décrits ci-après et que ces caractéristiques optionnelles ne sont pas incompatibles avec lesdits modes de réalisation particuliers :
- La porosité totale du produit est inférieure à 10%, voire inférieure à 5%.
- De préférence, les oxydes représentent plus de 90%, plus de 95%, plus de 99%, voire sensiblement 100% de la masse du produit.
- La teneur massique en ZrO₂ + HfO₂ est inférieure à 92,0%, voire inférieure à 90,0%, voire inférieure à 89,0% et/ou supérieure à 83,0%, voire supérieure à 84,0%, ou supérieure à 85,0%.
- La teneur massique en silice SiO₂ est supérieure à 2,5%, voire supérieure à 3,0% et/ou inférieure à 9,0%, voire inférieure à 8,0%, voire inférieure à 7,0%, voire inférieure à 6,0%.
- La teneur massique en Y₂O₃ est supérieure à 0,5%, voire supérieure à 0,7%, voire supérieure à 0,9%, voire supérieure à 1,0%, voire supérieure à 1,1%, et/ou inférieure à 1,9%, voire inférieure à 1,8%, voire inférieure à 1,7%, voire inférieure à 1,6%.
- La teneur massique en CaO est supérieure à 4,2%, voire supérieure à 4,4%, voire supérieure à 4,6% et/ou inférieure à 7,5%, voire inférieure à 7,2%, voire inférieure à 6,8%, voire inférieure à 6,5%.
- La somme des teneurs massiques en oxyde de bore B₂O₃, en oxyde de sodium Na₂O et en oxyde de potassium K₂O est supérieure à 0,6%, voire supérieure à 0,7%, voire supérieure à 0,8%, voire supérieure à 0,9% et/ou inférieure à 2,8%, inférieure à 2,5%, inférieure à 2,2%, voire inférieure à 2,0%, voire inférieure à 1,8%, voire inférieure à 1,6%.
- La teneur massique en oxyde de bore B₂O₃ est supérieure à 0,6%, voire supérieure à 0,7%, voire supérieure à 0,8%, voire supérieure à 0,9% et/ou inférieure à 2,8%, inférieure à 2,5%, inférieure à 2,2%, voire inférieure à 2,0%, voire inférieure à 1,8%, voire inférieure à 1,6%.
- De préférence B₂O₃ ≥ CaO / SiO₂.
- La somme des teneurs massiques en oxyde de sodium Na₂O et en oxyde de potassium K₂O est inférieure à 1,5%, voire inférieure à 1,0%, voire inférieure à 0,8%, voire inférieure à 0,6%, voire inférieure à 0,4%, voire inférieure à 0,3%, inférieure à 0,2%.
- L'oxyde de sodium Na₂O n'est présent qu'à titre d'impuretés et sa teneur massique est inférieure à 0,2%, voire inférieure à 0,1%.
- L'oxyde de potassium K₂O n'est présent qu'à titre d'impuretés et sa teneur massique est inférieure à 0,2%, voire inférieure à 0,1%.
- La teneur massique en alumine Al₂O₃ est inférieure à 1,5%, voire inférieure à 1,2%, ou inférieure à 1,1 %.
- La teneur massique en alumine Al₂O₃ est supérieure à 0,4%, supérieure à 0,6%, voire supérieure à 0,7%%, supérieure à 0,8 % ou supérieure à 0,9 %.
- La teneur massique en oxyde de fer et/ou en oxyde de titane, Fe₂O₃ + TiO₂, est inférieure à 0,4%, de préférence inférieure à 0,3%, de préférence inférieure à 0,2%.
- La teneur massique totale des « autres espèces » est inférieure à 1,0%, inférieure à 0,6%, inférieure à 0,5%, voire inférieure à 0,3%.
- Les « autres espèces » ne sont constituées que par des impuretés.
- La teneur massique d'une « autre espèce » quelconque est inférieure à 0,4%, voire inférieure à 0,3%, voire inférieure à 0,2%.

Suivant un mode de réalisation particulier, l'invention propose un produit réfractaire fondu et coulé comprenant, en pourcentages massiques sur la base des oxydes:
- SiO₂ : 3% à 8%
- Y₂O₃ : 1,0% à 2%
- CaO : 4,5% à 7,0%
- B₂O₃ : 0,7% à 2,5%
- Na₂O : < 0,5%
- Al₂O₃ : < 1,5%.

Suivant un mode de réalisation particulier, l'invention propose un produit réfractaire fondu et coulé comprenant, en pourcentages massiques sur la base des oxydes:
- SiO₂ : 3% à 6%
- Y₂O₃ : 1,0% à 2%
- CaO : 4,5% à 6,5%
- B₂O₃ : 0,8% à 2,0%
- Na₂O : < 0,5%
- Al₂O₃ : < 1,2%.

L'invention concerne également un procédé de fabrication d'un produit réfractaire selon l'invention, comprenant les étapes successives suivantes :
a) mélange de matières premières de manière à former une charge de départ,
b) fusion de ladite charge de départ jusqu'à obtention d'une matière en fusion,
c) coulage et solidification de ladite matière en fusion, par refroidissement, de manière à obtenir un produit réfractaire,
ce procédé étant remarquable en ce que lesdites matières premières sont choisies de manière que ledit produit réfractaire soit conforme à l'invention.

De préférence, on ajoute systématiquement et méthodiquement les oxydes pour lesquels une teneur minimale est nécessaire ou des précurseurs de ces oxydes. De préférence, on tient compte des teneurs de ces oxydes dans les sources des autres oxydes où ils sont présents comme impuretés.

De préférence, le refroidissement est contrôlé, de préférence de manière à être effectué à une vitesse inférieure à 20°C par heure, de préférence à la vitesse d'environ 10°C par heure.

L'invention concerne aussi un four de fusion de verre comportant un produit réfractaire selon l'invention, ou un produit réfractaire fabriqué ou susceptible d'avoir été fabriqué suivant un procédé selon l'invention, en particulier dans une région en contact ou destinée à être en contact avec du verre en fusion. Dans un four selon l'invention, le produit réfractaire peut avantageusement faire partie d'une cuve de préparation de verre par fusion, notamment par fusion électrique, où il est susceptible d'entrer en contact avec du verre en fusion à une température supérieure à 1200°C.

### Définitions

Les pourcentages massiques en oxydes se rapportent aux teneurs globales pour chacun des éléments chimiques correspondants, exprimées sous la forme de l'oxyde le plus stable, selon la convention habituelle de l'industrie.

Une « matière en fusion » est une masse liquide qui, pour conserver sa forme, doit être contenue dans un récipient. Elle peut contenir quelques particules solides, mais en quantité insuffisante pour qu'elles puissent structurer ladite masse.

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. Par exemple, les composés faisant partie du groupe des oxydes, nitrures, oxynitrures, carbures, oxycarbures, carbonitrures et espèces métalliques de fer, titane, et chrome sont des impuretés.

Sauf mention contraire, toutes les quantités d'oxydes dans les produits décrits et revendiqués sont des pourcentages massiques sur la base des oxydes.

### Description détaillée de l'invention

Dans les produits fondus et coulés selon l'invention, la forte teneur en zircone ZrO₂ permet de répondre aux exigences de haute résistance à la corrosion sans coloration du verre produit ni génération de défauts nuisibles à la qualité de ce verre.

L'oxyde d'hafnium, HfO₂, présent dans le produit selon l'invention est l'oxyde d'hafnium naturellement présent dans les sources de zircone. Sa teneur dans un produit selon l'invention est donc inférieure à 5%, généralement inférieure à 2%.

La présence de silice SiO₂ permet notamment la formation d'une phase vitreuse intergranulaire apte à accommoder de manière efficace les variations de volume de la zircone lors de sa transformation allotropique réversible, c'est-à-dire lors du passage de la phase monoclinique à la phase tétragonale. La teneur massique en silice doit être supérieure à 2%. En revanche, l'ajout de silice ne doit pas dépasser 10% car cet ajout se fait au détriment de la teneur en zircone et peut donc nuire à la résistance à la corrosion.

La présence de B₂O₃ permet notamment d'améliorer la faisabilité des produits. En revanche, l'ajout d'oxyde de bore doit rester limité car cet ajout se fait au détriment de la teneur en zircone et peut donc nuire à la résistance à la corrosion.

La présence d'alumine Al₂O₃ est notamment utile à la formation d'une phase vitreuse stable et à la bonne coulabilité de la matière en fusion dans le moule. Toutefois, l'ajout d'alumine ne doit pas dépasser 2,0% car une teneur massique plus élevée peut entraîner une instabilité de la phase vitreuse (formation de cristaux de mullite), en particulier du fait de la présence d'oxyde de bore.

La teneur massique de Na₂O+K₂O est de préférence inférieure à 0,50% afin de limiter les envolements de matières premières, en particulier de l'oxyde de bore. Dans un produit selon l'invention, on considère que les oxydes Na₂O et K₂O ont des effets similaires.

Selon l'invention, la teneur massique de Fe₂O₃ + TiO₂ est inférieure à 0,55% et celle de P₂O₅ est inférieure à 0,05%. En effet, ces oxydes sont néfastes et leur teneur doit être limitée à des traces introduites à titre d'impuretés avec les matières premières.

Les « autres espèces » sont les espèces oxydes qui ne sont pas listées ci-dessus, à savoir les espèces autres que ZrO₂, Hf₂O, SiO₂, Y₂O₃, CaO, B₂O₃, Al₂O₃, Na₂O, K₂O, P₂O₅, TiO₂, et Fe₂O₃. Dans un mode de réalisation, les « autres espèces » sont limitées à des espèces dont la présence n'est pas particulièrement souhaitée et qui sont généralement présentes à titre d'impuretés dans les matières premières.

Dans un autre mode de réalisation, les « autres espèces » peuvent également comprendre des espèces dont la présence est avantageuse. Ainsi, dans un mode de réalisation, le produit comporte avantageusement au moins 0,05% d'oxyde de baryum BaO. Cet oxyde peut être une impureté ou être ajouté volontairement dans la charge de départ, si nécessaire. De préférence sa teneur est inférieure à 0,5%, en pourcentage massique sur la base des oxydes.

La température de dilatation maximale d'un produit selon l'invention est de préférence inférieur à 900 °C, inférieur à 850 °C, voire inférieure à 800 °C.

Un produit selon l'invention peut être classiquement fabriqué suivant les étapes a) à c) décrites ci-dessous :
a) mélange de matières premières de manière à former une charge de départ,
b) fusion de ladite charge de départ jusqu'à obtention d'une matière en fusion,
c) solidification de ladite matière en fusion, par refroidissement, de manière à obtenir un produit réfractaire selon l'invention.

A l'étape a), les matières premières sont choisies de manière à garantir les teneurs en oxydes dans le produit fini.

A l'étape b), la fusion est de préférence réalisée grâce à l'action combinée d'un arc électrique assez long, ne produisant pas de réduction, et d'un brassage favorisant la réoxydation des produits.

Pour minimiser la formation de nodules d'aspect métallique et éviter la formation de fentes ou fendillements dans le produit final, il est préférable d'opérer la fusion dans des conditions oxydantes.

Préférentiellement on utilise le procédé de fusion à l'arc long décrit dans le brevet français n° 1 208 577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit en faisant barboter dans le bain un gaz oxydant (air ou oxygène, par exemple) ou encore en ajoutant au bain des substances dégageant de l'oxygène telles que des peroxydes ou des nitrates.

A l'étape c), le refroidissement est de préférence effectué à une vitesse inférieure à 20°C par heure, de préférence à la vitesse d'environ 10°C par heure.

Tout procédé conventionnel de fabrication de produits fondus à base de zircone destinés à des applications dans des fours de fusion de verre peut être mis en oeuvre, pourvu que la composition de la charge de départ permette d'obtenir des produits présentant une composition conforme à celle d'un produit selon l'invention.

### Exemples

Les exemples non limitatifs suivants sont donnés dans le but d'illustrer l'invention.

Dans ces exemples, on a employé les matières premières suivantes :
- de la zircone contenant principalement, en moyenne massique, 98,5% de ZrO₂ + HfO₂, 0,2% de SiO₂ et 0,02% de Na₂O,
- du sable de zircon à 33% de silice,
- des oxydes d'yttrium et de bore de pureté supérieure à 99%,
- de l'oxyde de calcium sous forme de chaux vive comportant environ 98% de CaO,
- de l'alumine de type AC44 vendue par la société Pechiney et contenant en moyenne 99,4% d'alumine Al₂O₃.

Les produits ont été préparés selon le procédé classique de fusion en four à arc, puis coulés pour obtenir des blocs de format 220 mm x 450 mm x 150 mm.

L'analyse chimique des produits obtenus est donnée dans le tableau 1 ; il s'agit d'une analyse chimique moyenne, donnée en pourcentages massiques.

### Faisabilité

Pour chacun de ces exemples, on évalue la faisabilité du produit grâce à un indice de faisabilité IF. Une valeur de IF égale à 2 correspond à une excellente faisabilité (rendement de fabrication optimal, pas de défauts sur les pièces obtenues), une valeur de IF égale à 1 correspond à une faisabilité acceptable pour une fabrication industrielle (quelques fissures non traversantes), une valeur de IF égale à 0 correspond à une faisabilité inacceptable pour une fabrication industrielle (fissures traversantes, pièces morcelées...).

### Indice de remplissage

Les différents exemples de blocs réalisés sont ensuite coupés en deux pour permettre l'observation de la zone interne et l'évaluation du remplissage du bloc. La qualité est évaluée grâce à un indice de remplissage IR. Une valeur de IR égale à 2 correspond à un excellent remplissage qui garantit une bonne résistance à la corrosion même en cas d'usure de la zone externe, une valeur de IR égale à 1 correspond à un remplissage acceptable, une valeur de IR égale à 0 correspond à un remplissage incomplet.

Sur les différents exemples de blocs réalisés, des échantillons ont été prélevés pour réaliser des tests.

### Mesure de la température de dilatation maximale avant changement de phase

On établit la courbe de dilatation en fonction de la température et on relève la température correspondant à la dilatation maximale, avant la transformation (monoclinique vers quadratique) de la zircone, notée « T » et donnée en °C dans le tableau 1. « N » indique qu'il n'y a pas de transformation de la zircone.

On compare également la dimension D de l'échantillon à 1500°C par rapport à sa dimension initiale D₀ (la position de dilatation maximale (avant la transformation de la zircone), et on calcule la variation (D-D₀)/D notée « D1500 » dans le tableau 1). Une valeur positive indique que les joints ne sont pas fermés.

L'exemple 1 correspond au produit ER1195 qui constitue la référence.

Le complément correspond à la teneur en ZrO₂+HfO₂ ainsi qu'aux impuretés (dont la teneur est toujours inférieure à 0,5% dans ces exemples).

**Tableau 1**

| Ex. | SiO₂ | Al₂O₃ | Y₂O₃ | CaO | Na₂O | B₂O₃ | CaO / SiO₂ | IF | IR | T | D1500 |
|---|---|---|---|---|---|---|---|---|---|---|---|
| 1* | 4,50 | 1,20 | 0,00 | 0,00 | 0,30 | 0,00 | 0,00 | 2 | 2 | 1130 | 0,60 |
| 2* | 4,50 | 1,10 | 0,88 | 0,00 | 0,40 | 0,00 | 0,00 | 2 | 2 | 1070 | 0,78 |
| 3* | 4,50 | 1,10 | 1,42 | 0,00 | 0,00 | 0,40 | 0,00 | 2 | 2 | 920 | 0,30 |
| 4* | 4,74 | 1,06 | 7,14 | 0,00 | 0,76 | 0,00 | 0,00 | 0 | 0 | N | -1,54 |
| 5* | 6,38 | 0,98 | 6,64 | 0,30 | 0,00 | 0,74 | 0,05 | 0 | 2 | N | -1,14 |
| 6* | 5,34 | 1,09 | 0,11 | 5,17 | 0,00 | 0,70 | 0,97 | 1 | 2 | 970 | 0,20 |
| 7* | 4,78 | 0,89 | 1,59 | 3,16 | 0,70 | 0,00 | 0,66 | 1 | 0 | 870 | 0,44 |
| 8 | 4,69 | 0,85 | 0,99 | 6,67 | 0,42 | 0,00 | 1,42 | 1 | 0 | 680 | -0,49 |
| 9 | 5,33 | 1,05 | 1,67 | 5,14 | 0,00 | 0,47 | 0,96 | 1 | 1 | 770 | -0,05 |
| 10 | 6,06 | 0,84 | 1,55 | 5,79 | 0,84 | 0,00 | 0,96 | 2 | 0 | N | -1,54 |
| 11 | 6,44 | 1,07 | 1,26 | 4,46 | 0,72 | 0,00 | 0,69 | 2 | 0 | 830 | -0,63 |
| 12 | 4,26 | 0,82 | 1,49 | 6,50 | 0,00 | 0,88 | 1,53 | 2 | 1 | 560 | -0,67 |
| 13 | 4,89 | 1,30 | 1,61 | 7,74 | 0,00 | 0,83 | 1,58 | 2 | 0 | N | -1,30 |
| 14 | 4,63 | 1,04 | 1,66 | 4,88 | 0,00 | 1,40 | 1,05 | 2 | 2 | 740 | -0,16 |
| 15 | 4,55 | 0,98 | 1,65 | 4,83 | 0,00 | 1,54 | 1,06 | 2 | 2 | 780 | -0,03 |
| 16 | 4,62 | 0,93 | 1,68 | 4,80 | 0,00 | 1,43 | 1,04 | 2 | 2 | 770 | -0,01 |
| 17 | 3,97 | 1,03 | 1,96 | 4,07 | 0,00 | 0,50 | 1,03 | 2 | 1 | 680 | -0,19 |
| 18 | 4,87 | 1,19 | 0,43 | 6,57 | 0,00 | 1,06 | 1,35 | 2 | 2 | 772 | -0,25 |
| 19 | 4,8 | 1,14 | 0,47 | 7,52 | 0,00 | 0,93 | 1,57 | 2 | 2 | 772 | -0,28 |
| 20 | 4,76 | 0,99 | 0,43 | 6,66 | 0,00 | 1,05 | 1,40 | 2 | 2 | 760 | -0,17 |

| | | | | | | | | | | | |
|---|---|---|---|---|---|---|---|---|---|---|---|
| * hors invention | | | | | | | | | | | |

Les exemples 2 et 3 montrent que l'oxyde d'yttrium seul, à des teneurs inférieures à 2% ne permet pas de fermer les joints.

Les exemples 4 et 5 montrent que l'oxyde d'yttrium seul, à des teneurs de 6 à 8% permet de fermer les joints et de stabiliser totalement la zircone (plus de transformation). Cependant la faisabilité de tels produits se dégrade et rend de telles compositions inutilisables pour la réalisation de très gros blocs industriels.

L'exemple 6 montre l'effet préjudiciable sur la fermeture des joints d'une teneur insuffisante en Y₂O₃.

Une comparaison de l'exemple 7 avec les exemples 10 ou 12 montre l'importance de la présence d'une quantité minimale d'oxyde de calcium pour obtenir la fermeture des joints.

Les exemples 8 et 9 montrent des produits permettant la fermeture des joints tout en ayant une faisabilité acceptable mais une comparaison avec les exemples 10 à 20 montre l'intérêt de la présence d'une quantité minimale d'oxyde de bore et/ou sodium pour obtenir une excellente faisabilité en présence d'oxyde d'yttrium et d'oxyde de calcium.

Les exemples 10 à 20 montrent que la présence simultanée d'oxyde d'yttrium et d'oxyde de calcium selon l'invention permet de fermer les joints tout en gardant une excellente faisabilité. On observe également un abaissement significatif la température de dilatation maximale avant changement de phase. Ainsi, il devient avantageusement possible de réduire la température du verre en fusion en contact avec la région critique et donc la corrosion qu'elle engendre.

Les exemples 10 et 11 montrent l'intérêt d'un ajout de B₂O₃ pour améliorer le remplissage.

Les exemples montrent également le rôle positif de l'oxyde de bore pour optimiser le remplissage, notamment à des teneurs supérieures à 0,9%, voire supérieures à 1,0%, voire lorsque cette teneur devient supérieure au rapport des teneurs en oxyde de calcium et en silice.

Par ailleurs, d'autres essais ont permis de vérifier que les produits selon l'invention présentent également les autres propriétés reconnues pour les matériaux à forte teneur en zircone, en particulier la résistance à la corrosion par le verre en fusion.

Bien entendu, la présente invention n'est pas limitée aux modes de réalisation décrits et représentés fournis à titre d'exemples illustratifs et non limitatifs.

## Revendications

1. Produit réfractaire fondu et coulé comportant, en pourcentages massiques sur la base des oxydes et pour un total de 100% :
- ZrO₂ : complément à 100%
- Hf₂O : < 5%
- SiO₂ : 2% à 10%
- Y₂O₃ : 0,4% à 2,0%
- CaO : 4,0% à 8,0%
- B₂O₃ + Na₂O + K₂O : 0,4% à 3,0%
- Al₂O₃ : 0,3% à 2,0%
- P₂O₅: < 0,05%
- Fe₂O₃ + TiO₂ : < 0,55%
- autres espèces : < 1,5%.

2. Produit selon la revendication précédente, dans lequel (Na₂O+K₂O) < 0,5%.

3. Produit selon l'une quelconque des revendications précédentes, dans lequel la teneur en oxyde d'yttrium Y₂O₃ est supérieure ou égale à 0,7%.

4. Produit selon la revendication précédente, dans lequel la teneur en oxyde d'yttrium Y₂O₃ est supérieure ou égale à 1,0%.

5. Produit selon l'une quelconque des revendications précédentes, dans lequel la teneur en oxyde de calcium CaO est supérieure à 4,5%.

6. Produit selon l'une quelconque des revendications précédentes, dans lequel la teneur en oxyde de calcium CaO est inférieure à 7,0%.

7. Produit selon la revendication précédente, dans lequel la teneur en oxyde de calcium CaO est inférieure à 6,5%.

8. Produit selon l'une quelconque des revendications précédentes, dans lequel la teneur en oxyde de bore B₂O₃ est supérieure à 0,7%.

9. Produit selon l'une quelconque des revendications précédentes, dans lequel la teneur en oxyde de bore est inférieure à 2,5%.

10. Produit selon la revendication précédente, dans lequel la teneur en oxyde de bore B₂O₃ est inférieure à 2,0%.

11. Produit selon l'une quelconque des revendications précédentes, dans lequel la teneur en silice SiO₂ est inférieure à 8,0%.

12. Produit selon la revendication précédente, dans lequel la teneur en silice SiO₂ est inférieure à 6,0%.

13. Produit selon l'une quelconque des revendications précédentes, dans lequel la teneur en oxyde de bore est telle que B₂O₃ ≥ CaO / SiO₂.

14. Produit selon l'une quelconque des revendications précédentes, dans lequel la teneur en alumine Al₂O₃ est inférieure à 1,5%.

15. Four de fusion de verre comportant, dans une région destinée à être en contact avec le verre en fusion, un produit réfractaire selon l'une quelconque des revendications précédentes.

## Patentansprüche

1. Geschmolzenes gegossenes Feuerfestprodukt, welches in Massenprozenten auf der Basis von Oxiden und für eine Gesamtheit von 100% beinhaltet:
- ZrO₂: vervollständigend zu 100%
- Hf₂O: < 5%
- SiO₂: 2% bis 10%
- Y₂O₃ 0,4% bis 2,0 %
- CaO: 4,0% bis 8,0%
- B₂O₃+Na₂O+K₂O: 0,4% bis 3%
- Al₂O₃: 0,3% bis 2,0%
- P₂O₅: <0,05%
- Fe₂O₃+TiO₂: <0,55%
- Andere Spezies: <1,5%

2. Produkt nach dem vorhergehenden Anspruch, in welchem (Na₂O+K₂O) <0,5% ist.

3. Produkt nach einem der vorhergehenden Ansprüche, in welchem der Gehalt an Yttriumoxyd Y₂O₃ größer oder gleich 0,7% ist.

4. Produkt nach dem vorhergehenden Anspruch, in welchem der Gehalt an Yttriumoxyd Y₂O₃ größer oder gleich 1,0% ist.

5. Produkt nach einem der vorhergehenden Ansprüche, in welchem der Gehalt an Kalziumoxyd CaO größer als 4,5% ist.

6. Produkt nach einem der vorhergehenden Ansprüche, in welchem der Gehalt an Kalziumoxyd CaO kleiner als 7,0% ist.

7. Produkt nach dem vorhergehenden Anspruch, in welchem der Gehalt an Kalziumoxyd CaO kleiner als 6,5% ist.

8. Produkt nach einem der vorhergehenden Ansprüche, in welchem der Gehalt an Boroxyd B₂O₃ größer als 0,7% ist.

9. Produkt nach einem der vorhergehenden Ansprüche, in welchem der Gehalt an Boroxyd kleiner als 2,5% ist.

10. Produkt nach dem vorhergehenden Anspruch, in welchem der Gehalt an Boroxyd B₂O₃ kleiner als 2,0% ist.

11. Produkt nach einem der vorhergehenden Ansprüche, in welchem der Gehalt an Siliciumoxyd SiO₂ kleiner als 8,0% ist.

12. Produkt nach dem vorhergehenden Anspruch, in welchem der Gehalt an Siliciumoxyd SiO₂ kleiner als 6,0% ist.

13. Produkt nach einem der vorhergehenden Ansprüche, in welchem der Gehalt an Boroxyd derart ist, dass B₂O₃ ≥ CaO/ SiO₂.

14. Produkt nach einem der vorhergehenden Ansprüche, in welchem der Gehalt an Aluminiumoxyd Al₂O₃ kleiner als 1,5% ist.

15. Glasschmelzofen, der in einem Bereich, welcher bestimmt ist in Kontakt mit in Schmelze befindlichem Glas zu sein, ein Feuerfestprodukt nach einem der vorhergehenden Ansprüche aufweist.

## Claims

1. A fused and cast refractory product comprising, as mass percentages on the basis of the oxides and for a total of 100%:
- ZrO₂: remainder to 100%
- Hf₂O: < 5%
- SiO₂: 2% to 10%
- Y₂O₃: 0.4% to 2.0%
- CaO: 4.0% to 8.0%
- B₂O₃ + Na₂O + K₂O: 0.4% to 3.0%
- Al₂O₃: 0.3% to 2.0%
- P₂O₅: < 0.05%
- Fe₂O₃ + TiO₂: < 0.55%
- other species: < 1.5%.

2. The product as claimed in the preceding claim, in which (Na₂O+K₂O) < 0.5%.

3. The product as claimed in either of the preceding claims, in which the content of yttrium oxide Y₂O₃ is greater than or equal to 0.7%.

4. The product as claimed in the preceding claim, in which the content of yttrium oxide Y₂O₃ is greater than or equal to 1.0%.

5. The product as claimed in any one of the preceding claims, in which the content of calcium oxide CaO is greater than 4.5%.

6. The product as claimed in any one of the preceding claims, in which the content of calcium oxide CaO is less than 7.0%.

7. The product as claimed in the preceding claim, in which the content of calcium oxide CaO is less than 6.5%.

8. The product as claimed in any one of the preceding claims, in which the content of boron oxide B₂O₃ is greater than 0.7%.

9. The product as claimed in any one of the preceding claims, in which the content of boron oxide is less than 2.5%.

10. The product as claimed in the preceding claim, in which the content of boron oxide B₂O₃ is less than 2.0%.

11. The product as claimed in any one of the preceding claims, in which the content of silica SiO₂ is less than 8.0%.

12. The product as claimed in the preceding claim, in which the content of silica SiO₂ is less than 6.0%.

13. The product as claimed in any one of the preceding claims, in which the content of boron oxide is such that B₂O₃ ≥ CaO/SiO₂.

14. The product as claimed in any one of the preceding claims, in which the content of alumina Al₂O₃ is less than 1.5%.

15. A glass melting furnace comprising, in a region intended to be in contact with the molten glass, a refractory product as claimed in any one of the preceding claims.
